# EUROPEAN PATENT APPLICATION

(11) **EP 4 563 678 A1**
(43) Date of publication of application: **04.06.2025**
(21) Application number: 24817031.8
(22) Date of filing: 12.04.2024
(51) Int. Cl.: C10L 1/32

(54) **BIOMASS-CONTAINING FUEL**

(30) Priority: 04.10.2023 JP 2023173001
(71) Applicant: Solariant Capital Co., Ltd., Minato-ku, Tokyo 1066137 (JP); Nippon Shokubai Co., Ltd., Osaka-shi, Osaka 5410043 (JP); Solariant Capital, LLC., Pasadena CA 91101 (US)
(72) Inventor: KONO, Katsuyuki, Suita-shi, Osaka 564-0034 (JP); TOKUDA, Shinichi, Tokyo 106-6137 (JP); TSURUI, Masao, Tokyo 106-6137 (JP)
(74) Representative: Cabinet Beau de Loménie
(86) International application number: PCT/JP2024/014778
(87) International publication number: WO 2025/074673

(57) **Abstract**

The present invention aims to provide a biomass-containing fuel that has excellent combustion characteristics like fuels such as heavy oil. The present invention relates to a biomass-containing fuel containing a char produced by pyrolysis of plant biomass and a fuel oil.

## Description

### TECHNICAL FIELD

The present invention relates to biomass-containing fuels. Specifically, the present invention relates to a biomass-containing fuel that is suitable for use as fuels for diesel engines, boilers, gas turbines, etc., and as sustainable aviation fuels.

### BACKGROUND ART

Slurry fuels, which are made by adding liquid such as heavy oil to powdered solid fuels such as coal, have been developed as an alternative to liquid fuels such as heavy oil.

Regarding coal slurry fuels, for example, Patent Literature 1 discloses a fuel oil composition containing: (i) a granular material in which at least about 90% by volume of particles have a size of about 20 microns or less; and (ii) a liquid fuel oil. The granular material is present in an amount of at most about 30% by mass based on the total mass of the fuel oil composition, the granular material is a carbonaceous material, and the granular material has an ash content of less than 5% by mass. Patent Literature 2 also discloses a fuel oil composition.

The increase in carbon dioxide emissions due to the mass consumption of fossil fuels is a major factor in global warming, and there is a demand to reduce carbon dioxide emissions.

Plant biomass such as wood emits carbon dioxide when combusted. This carbon dioxide is equivalent to the carbon dioxide that has been absorbed by plants during the plants' growth process and does not affect the increase or decrease of carbon dioxide in the atmosphere. Therefore, it is hoped that plant biomass will be used as fuels to realize a decarbonized society.

Patent Literature 3 discloses a method for producing a charcoal slurry fuel, the method including mixing charcoal with a liquid for making a slurry to produce a charcoal slurry fuel.

### CITATION LIST

### - Patent Literature

Patent Literature 1: JP 2021-101030 A
Patent Literature 2: JP 2019-513840 A
Patent Literature 3: JP 2015-221877 A

### SUMMARY OF INVENTION

### - Technical Problem

As described above, fuels prepared by using plant biomass have been developed, but there is a demand for further development of biomass-containing fuels that have excellent combustion characteristics like fuels such as heavy oil.

The present invention has been made in consideration of the above-described current situation, and aims to provide a biomass-containing fuel that has excellent combustion characteristics like fuels such as heavy oil.

### - Solution to Problem

The present inventors have studied various biomass-containing fuels and found that a biomass-containing fuel containing a char produced by pyrolysis of plant biomass and a fuel oil has excellent combustion characteristics like fuels such as heavy oil. The finding leads to a solution of the above-described problem, and the present inventors have now completed the present invention.

The present invention encompasses the following biomass-containing fuels, etc.
(1) A biomass-containing fuel containing: char produced by pyrolysis of plant biomass; and a fuel oil.
(2) The biomass-containing fuel according to (1), wherein the char produced by pyrolysis of plant biomass is obtained by pyrolysis at a temperature of 250°C to 450°C.
(3) The biomass-containing fuel according to (1) or (2), wherein the char produced by pyrolysis of plant biomass contains particles, with 95% or more of the particles having a particle size of 50 µm or less.
(4) The biomass-containing fuel according to any one of (1) to (3), wherein the char produced by pyrolysis of plant biomass has an average particle size of 0.1 µm or more and 20 µm or less.
(5) The biomass-containing fuel according to any one of (1) to (4), wherein the char produced by pyrolysis of plant biomass is contained in a proportion of 10 to 60% by mass based on 100% by mass of the biomass-containing fuel.
(6) The biomass-containing fuel according to any one of (1) to (5), wherein the biomass-containing fuel has a viscosity of 1000 mPa·s or less.
(7) A method for producing a biomass-containing fuel, the method including: carbonizing plant biomass by pyrolysis to produce a char; pulverizing the char obtained in the carbonizing; and mixing the pulverized material obtained in the pulverizing with a fuel oil.

### - Advantageous Effects of Invention

The biomass-containing fuel of the present invention having the above-described structure has excellent combustion characteristics like fuels such as heavy oil, and can therefore be suitable for use as fuels for diesel engines, boilers, gas turbines, etc., or as sustainable aviation fuels.

### DESCRIPTION OF EMBODIMENTS

Preferred embodiments of the present invention are described in detail below, but the present invention is not limited to the following description. The present invention can be modified and applied as appropriate within the scope that does not change the gist of the present invention. Any combination of two or more of the following preferred embodiments of the present invention is also a preferred embodiment of the present invention.

### (Biomass-containing fuel)

The biomass-containing fuel of the present invention contains a char produced by pyrolysis of plant biomass and a fuel oil.

The biomass-containing fuel containing a char produced by pyrolysis of plant biomass has excellent dispersibility and thus has excellent combustion characteristics.

Preferably, the char produced by pyrolysis of plant biomass is contained in the biomass-containing fuel in a proportion of 10 to 60% by mass based on 100% by mass of the biomass-containing fuel, but the proportion is not limited thereto. This makes it possible to more sufficiently reduce the amount of fuel oil used, and to more effectively reduce CO₂ emissions.

The proportion of the char produced by pyrolysis of plant biomass is more preferably 15 to 55% by mass, still more preferably 20 to 50% by mass, particularly preferably 25 to 45% by mass.

Preferably, the fuel oil is contained in the biomass-containing fuel in a proportion of 40 to 90% by mass based on 100% by mass of the biomass-containing fuel, but the proportion is not limited thereto. The proportion is more preferably 45 to 85% by mass, still more preferably from 50 to 80% by mass, particularly preferably from 55 to 75% by mass.

The biomass-containing fuel may contain a different component in addition to the char produced by pyrolysis of plant biomass and the fuel oil. Preferably, the different component may be contained in a proportion of 20% by mass or less based on 100% by mass of the biomass-containing fuel, but the proportion is not limited thereto. The proportion is more preferably 10% by mass or less, still more preferably 5% by mass or less.

The biomass-containing fuel may further contain a dispersant as a different component, but the biomass-containing fuel of the present invention has excellent dispersibility even when no dispersant is used.

Preferably, the dispersant may be contained in a proportion of 10% by mass or less relative to 100% by mass of the char produced by pyrolysis of plant biomass. The proportion is more preferably 5% by mass or less, still more preferably 3% by mass or less.

The biomass-containing fuel preferably has a viscosity at 25°C of 1000 mPa·s or less. This allows the biomass-containing fuel to have higher fluidity, better handleability, and better transportability. The viscosity of the biomass-containing fuel is more preferably 800 mPa·s or less, still more preferably 600 mPa·s or less, particularly preferably 500 mPa·s or less. Of biomass-containing fuels having a viscosity at 25°C of 1000 mPa·s or more, one whose viscosity can be reduced to 1000 mPa·s or less by heating to 80°C can be used without problems in a fuel tank equipped with heating equipment.

The viscosity of the biomass-containing fuel can be measured by the method described in the EXAMPLES.

The biomass-containing fuel may have thixotropy or rheopexy, and preferably has thixotropic properties.

The following further describes essential components and optional components contained in the biomass-containing fuel of the present invention.

### <Char produced by pyrolysis of plant biomass>

The char produced by pyrolysis of plant biomass is not limited as long as it is a char obtained by pyrolyzing plant biomass.

The plant biomass is not limited as long as it is an organic matter derived from a plant. Examples of the plant include woody plants and herbaceous plants.

Examples of woody plants include conifers such as cedar, fir, Japanese cypress, hiba arborvitae, pine, ginkgo, Japanese torreya, and Japanese yew, and broad-leaved trees such as eucalyptus, acacia, birch, beech, oak, katsura tree, sawtooth oak, cherry, zelkova, maple, chestnut, evergreen oak, paulownia, poplar, teak, and mahogany. Of these, cedar and acacia are preferred.

Examples of herbaceous plants include rice (straw, husk), wheat (straw, husk), buckwheat (straw, husk), sugarcane (bagasse), erianthus, corn, rapeseed, soybean, palm, reed, bamboo grass, bamboo, and sugar beet. Of these, sugarcane (bagasse) is preferred.

The plants in the plant biomass are preferably woody plants, since woody plants have a low ash content.

The char produced by pyrolysis of plant biomass preferably has an ash content of 15% by mass or less. The ash content is more preferably 10% by mass or less, still more preferably 3% by mass or less.

The ash content can be measured, for example, in accordance with JIS M 8812:2004.

The char produced by pyrolysis of plant biomass preferably has a nitrogen content of 1.0% by mass or less. The nitrogen content is more preferably 0.7% by mass or less, still more preferably 0.5% by mass or less.

The nitrogen content can be measured, for example, in accordance with JIS M 8813:2004.

The char produced by pyrolysis of plant biomass preferably has a sulfur content of 0.5% by mass or less. The sulfur content is more preferably 0.1% by mass or less, still more preferably 0.05% by mass or less.

The sulfur content can be measured, for example, in accordance with JIS M 8813:2004.

Preferably, the char produced by pyrolysis of plant biomass includes particles, with 95% or more of the particles having a particle size of 100 µm or less. Plant tissue has a honeycomb structure, and the char has almost the same shape as the honeycomb structure. Such a char when pulverized has a broken honeycomb structure. The complex structure thereof has a significant effect on the fluidity of the fuel when the char is dispersed therein. On the other hand, when the char includes particles, with 95% or more of the particles having a particle size of 100 µm or less, the fuel is not affected by the complex structure of plant tissue. Thus, the fluidity of the fuel when the char is dispersed therein is more improved. This allows the biomass-containing fuel of the present invention to have better handleability and better transportability.

In the char produced by pyrolysis of plant biomass, more preferably, 95% or more of the particles have a particle size of 50 µm or less, and still more preferably, 95% or more of the particles have a particle size of 30 µm or less.

The particle size of the char produced by pyrolysis of plant biomass and the proportion of the target particles can be measured by the method described in the EXAMPLES.

The char produced by pyrolysis of plant biomass preferably has an average particle size of 0.1 µm or more and 20 µm or less. When the average particle size is 20 µm or less, the fluidity of the fuel when the char is dispersed therein is improved. When it is 0.1 µm or more, an increase in the viscosity due to an increase in the specific surface area of the char can be sufficiently prevented or reduced.

The average particle size is more preferably 0.5 to 15 µm, further still more preferably 1 to 10 µm, particularly preferably 1 to 5 µm.

The average particle size of the char produced by pyrolysis of plant biomass can be measured by the method described in the EXAMPLES.

The char produced by pyrolysis of plant biomass can be obtained by pyrolyzing raw material plant biomass. The char thus obtained is in a semi-carbonized state and thus can be finely pulverized. The char produced by pyrolysis of plant biomass is preferably produced by carbonizing plant biomass by pyrolysis.

The temperature of the pyrolysis is preferably, but not limited to, 250°C to 550°C. When the temperature of the pyrolysis is 250°C or higher, carbonization proceeds efficiently and excellent productivity is achieved. When the temperature of the pyrolysis is 550°C or lower, the yield of the char further increases. When the temperature of the pyrolysis is within the above range, volatile components having molecular weights falling within suitable ranges can be obtained in the carbonizing of plant biomass. Such volatile components can be suitably used as fuels, etc. Also, when the temperature of the pyrolysis is within the above range, hydrophobic components remain on the surface of the char to be obtained. This is thought to improve the wettability to the fuel oil and contribute to the dispersibility of the char in the biomass-containing fuel.

The temperature of the pyrolysis is more preferably 250°C to 500°C, still more preferably 260°C to 450°C, further more preferably 300°C to 430°C, particularly preferably 350°C to 400°C.

Preferred conditions for the carbonizing of plant biomass by pyrolysis are described later in the description of the method for producing a biomass-containing fuel.

### <Fuel oil>

The fuel oil contained in the biomass-containing fuel of the present invention is not limited as long as it is an oil that can be used as a fuel. When the fuel oil is a fossil fuel, it is preferably a highly distilled product derived from crude oil. The fuel oil is more preferably a liquid fuel oil such as light oil, heavy oil, kerosene, naphtha, gasoline, or jet fuel oil, still more preferably light oil, heavy oil, or kerosene. Examples of heavy oil include heavy oil A, heavy oil B, and heavy oil C. The fuel oil may contain bioalcohol and/or biodiesel. The bioalcohol is a biomass-derived alcohol such as ethanol, isopropanol, or butanol obtained by fermenting carbohydrates with bacteria or the like. The biodiesel is a biodiesel fuel oil obtained by processing oils and fats obtained from vegetable oils, seaweed, or the like. The fuel oil may further contain components that are obtained by collecting and cooling volatile components during the main pyrolysis and can be used as fuels, and modified products of these components. To reduce carbon dioxide emissions, the fuel oil preferably contains as little petroleum fuel oil as possible and more biofuel oil.

The fuel oil preferably has a viscosity of 500 mPa·s or less, but the viscosity is not limited thereto. The viscosity is more preferably 300 mPa·s or less, still more preferably 100 mPa·s or less, particularly preferably 50 mPa·s or less.

The viscosity of the fuel oil can be measured in the same manner as the viscosity of the biomass-containing fuel.

### <Different component>

The biomass-containing fuel of the present invention may contain a different component in addition to the char produced by pyrolysis of plant biomass and the fuel oil.

Non-limiting examples of the different component include stabilizers, separation reducing agents, thickeners, viscosity reducers, biofuels, dispersants, ignition agents, cetane number improvers, and lubricants.

Non-limiting examples of the stabilizers include adducts of alcohols with polyalkylene oxide. Of these, adducts of glycerin with polyalkylene oxide are preferred.

Non-limiting examples of the thickeners include polymer materials such as polysaccharides, polyacrylamides, polyalkylene oxides, polyacrylic acids and salts thereof, acrylic polymers, and polyvinyl alcohol.

Non-limiting examples of the viscosity reducers include glycol monoethers, glycol diethers, phenyl glycol ethers, and benzyl glycols.

Non-limiting examples of the dispersants include (i) various sulfonic acid dispersants having a sulfonic acid group in the molecule including: polyalkylarylsulfonate dispersants such as naphthalenesulfonic acid-formaldehyde condensates; melamine formalin resin sulfonate dispersants such as melamine sulfonic acid-formaldehyde condensates; aromatic aminosulfonate dispersants such as aminoarylsulfonic acid-phenol-formaldehyde condensates; lignin sulfonate dispersants such as lignin sulfonates and modified lignin sulfonates; polystyrene sulfonate dispersants; and nonylphenylol sulfonate, (ii) various polycarboxylic acid dispersants having a (poly)oxyalkylene group and a carboxy group in the molecule including: polyalkylene glycol mono(meth)acrylic acid ester monomers, (meth)acrylic acid monomers, and copolymers obtained from any monomers copolymerizable with these monomers, as described in JP 59-18338 B and JP H07-223852 A; and copolymers obtained from any of unsaturated (poly)alkylene glycol ether monomers, maleic acid monomers, and (meth)acrylic acid monomers, as described in JP H10-236858 A, JP 2001-220417 A, JP 2002-121055 A, and JP 2002-121056 A, (iii) polyvinylpyrrolidone, (iv) polyacrylic acid, (v) various phosphoric acid dispersants including: copolymers having a (poly)oxyalkylene group and a phosphoric acid ester group in the molecule, such as copolymers obtained from any of (alkoxy)polyalkylene glycol mono(meth)acrylates, phosphoric acid monoester monomers, and phosphoric acid diester monomers, as described in JP 2006-52381 A; polycondensation products including a monomer having a (poly)oxyalkylene group and an aromatic ring group and/or a heterocyclic aromatic group, a monomer having a phosphoric acid (salt) group and/or a phosphoric acid ester group and an aromatic ring group and/or a heterocyclic aromatic group, and an aldehyde compound, as described in JP 2008-517080 T; and dispersants having an aromatic triazine structural unit, a polyalkylene glycol structural unit, and a phosphoric acid ester structural unit, as described in JP 2015-508384 T, (vi) anionic surfactants such as alkyl sulfate ester salts, higher alcohol sulfate ester salts, nonionic ether sulfate ester salts, olefin sulfate ester salts, polyoxyethylene alkyl (alkylphenol) sulfate ester salts, alkyl aryl sulfonates, dibasic acid ester sulfonates, alkyl benzene sulfonates, alkyl naphthalene sulfonates, dialkyl sulfosuccinates, alkyl phosphate ester salts, and acyl sarcosinates, (vii) cationic surfactants such as alkylamine salts, quaternary amine salts, and alkylpyridinium sulfates, (viii) nonionic surfactants such as polyoxyalkyl ethers, polyoxyethylene alkylphenol ethers, oxyethylene-oxypropylene block polymers, polyoxyethylene alkylamines, sorbitan fatty acid esters, polyoxyethylene sorbitan fatty acid esters, alkyltrimethylammonium chlorides, alkyldimethylbenzylammonium chlorides, polyoxyethylene fatty acid esters, aliphatic alcohol polyoxyethylene ethers, polyhydric alcohol fatty acid esters, and ethanolamides of fatty acids, and (ix) amphoteric surfactants such as alkylbetaines.

The dispersant preferably has a weight average molecular weight of 100 to 1,000,000, but the weight average molecular weight is not limited thereto. The weight average molecular weight is more preferably 200 to 500,000, still more preferably 300 to 100,000.

The weight-average molecular weight of the dispersant can be measured by GPC.

### [Method for producing biomass-containing fuel]

The biomass-containing fuel of the present invention may be produced by any method, and is preferably produced by a method including carbonizing plant biomass by pyrolysis to produce a char, pulverizing the char obtained in the carbonizing, and mixing the pulverized material obtained in the pulverizing with a fuel oil. The present invention also encompasses a method for producing a biomass-containing fuel, the method including carbonizing plant biomass by pyrolysis to produce a char, pulverizing the char obtained in the carbonizing, and mixing the pulverized material obtained in the pulverizing with a fuel oil.

The carbonizing is not limited as long as the plant biomass is carbonized by pyrolysis. The temperature of the pyrolysis is preferably 250°C to 550°C. The temperature is more preferably 250°C to 500°C, still more preferably 260°C to 450°C, further more preferably 300°C to 430°C, particularly preferably 350°C to 400°C.

The system in the carbonizing preferably has a pressure of 0.1 to 100 atm, but the pressure is not limited thereto. The pressure is more preferably 0.5 to 10 atm, still more preferably 1 to 5 atm, particularly preferably 1 to 3 atm.

The system in the carbonizing preferably has an oxygen concentration of 0% to 5%, but the oxygen concentration is not limited thereto. The oxygen concentration is more preferably 0% to 3%, still more preferably 0% to 1%.

The pyrolysis in the carbonizing is preferably performed for a duration of three minutes to three hours, but the duration is not limited thereto. The duration is more preferably five minutes to one hour.

The carbonizing may be performed by any equipment. Examples thereof include horizontal moving bed reactors such as a mesh belt type continuous furnace, a tunnel kiln, and a rotary kiln; and twin-screw extruders.

The pulverizing is not limited as long as it pulverizes the char obtained in the carbonizing, and may be wet pulverization or dry pulverization.

The pulverizing may be performed by any pulverizer. Examples thereof include a hammer mill, a ball mill, a tube mill, a rod mill, a jet mill, and a bead mill.

The mixing is not limited as long as the pulverized material obtained in the pulverizing is mixed with a fuel oil. The mixing preferably includes dispersing the pulverized material into the fuel oil by stirring or with ultrasonic waves.

In the mixing, a stirrer such as a disperser, a homogenizer, a line mixer, or a static mixer, or an ultrasonic disperser is preferably used. Alternatively, the fuel oil may be added to the pulverizer in the latter half of the pulverizing to perform dispersion simultaneously with pulverization.

The mixing may be performed in any atmosphere such as an air atmosphere or an inert gas atmosphere. Preferably, the mixing is performed while introducing an inert gas such as nitrogen.

The mixing is preferably performed in an explosion-proof facility.

The method for producing a biomass-containing fuel of the present invention preferably includes drying the raw material plant biomass before the carbonizing.

The drying is not limited as long as it dries the raw material plant biomass. Preferably, the drying is performed until the moisture content of the raw material plant biomass is reduced to 25% or less.

The method for producing a biomass-containing fuel of the present invention preferably includes crushing the raw material plant biomass into pieces of 50 mm or less before the carbonizing.

The method for producing a biomass-containing fuel of the present invention may include, after the mixing, filtering the composition obtained in the mixing. For the filtering, a 50- to 300-mesh wire screen is preferably used.

### EXAMPLES

The present invention is described in more detail below with reference to examples, but the present invention is not limited to these examples. Unless otherwise specified, "%" means "% by mass."

### <Method of measuring particle size>

A pulverized biomass char was added to a 10% aqueous solution of naphthalenesulfonic acid-formalin condensate to a concentration of 10%. They were subjected to dispersion for 15 minutes using an ultrasonic disperser. The particle size distribution of the resulting dispersion was determined using a laser diffraction/scattering particle size distribution analyzer (LA-950V2, available from HORIBA, Ltd.).

### <Method of measuring viscosity>

Biomass-containing fuels obtained in Examples 3 and 4 were measured for a viscosity at 25°C and 5 rpm using an E-type viscometer (Toki Sangyo Co., Ltd., TV-100, rotor #1).

### <Evaluation of ignition and combustion characteristics of fuel>

A combustion test analyzer (FIA-100) compatible with IP541/06, a test method for combustion characteristics, was used to create high-temperature, high-pressure (20 bar, 450°C) air in a combustion chamber of a fixed volume, simulating a diesel engine combustion chamber, and a test fuel was injected into the chamber and combusted. Tests were conducted to obtain information about combustion (ignition delay time, main combustion delay, maximum heat release position, end of main combustion, end of combustion, main combustion period, total combustion period, heat release rate, total heat release amount, estimated cetane number, etc.) from pressure changes in the combustion chamber. The estimated cetane number was calculated using the calibration curve that was prepared in advance using two types of standard fuels with known cetane numbers.

In order to make the spray characteristics uniform, the fuel sample to be used in the measurements was heated to a kinetic viscosity of approximately 20 cSt, and injection and combustion were performed 10 times to obtain data. Table 1 shows the main combustion period, total combustion period, average estimated cetane number, and standard deviation of the ignition delay time.

### <Example 1>

Cedar was crushed into chips of 15 mm or less, and the chips were dried to a moisture content of 15% or less. The chips were pyrolyzed in a rotary kiln having a barrel length of 3.5 m, an inclination angle of 4 degrees, and an internal baffle plate installed therein at 1.5 revolutions per minute, an internal temperature of 400°C, and atmospheric pressure. The operation was adjusted so that it took about 30 minutes from charging to discharging, and a cedar char was obtained. The obtained char was coarsely ground using a commercial hammer mill (RT-34, available from LaboNext), and then the coarsely ground char was pulverized using a commercial fine pulverizer to obtain a pulverized char with an average particle size of 5 µm.

Kerosene was charged into a reactor, and a small amount of nitrogen was continuously introduced into the reactor with stirring. The pulverized char with an average particle size of 5 µm in an amount to give a concentration of 30% was slowly added. After the addition, the mixture was stirred for an additional hour. After the stirring, the mixture was filtered through a 200-mesh wire screen to obtain a cedar biomass oil mixture (BOM).

To 100 g of the cedar BOM was added 100 g of light oil to obtain a composition (biomass-containing fuel, char 15%). The composition was tested for ignition and combustion characteristics of fuels. The results are shown in Table 1.

### <Example 2>

A pulverized char with an average particle size of 5 µm was obtained as in Example 1 except that bagasse was used as the plant biomass, and then a bagasse BOM was obtained as in Example 1.

To 100 g of the bagasse BOM was added 50 g of light oil to obtain a composition (biomass-containing fuel, char 20%). The composition was tested for ignition and combustion characteristics of fuels. The results are shown in Table 1.

<Example 3>

Heavy oil A was charged into a reactor, and a small amount of nitrogen was continuously introduced into the reactor with stirring. The pulverized cedar char with an average particle size of 5 µm in an amount to give a concentration of 30% was slowly added. After the addition, the mixture was stirred for an additional hour. After the stirring, the mixture was filtered through a 200-mesh wire screen to obtain a cedar biomass oil mixture (BOM). The viscosity was 335 mPa·s. The cedar BOM was tested for ignition and combustion characteristics of fuels. The results are shown in Table 1.

### <Example 4>

Heavy oil A was charged into a reactor, and a small amount of nitrogen was continuously introduced into the reactor with stirring. The pulverized bagasse char with an average particle size of 5 µm in an amount to give a concentration of 30% was slowly added. After the addition, the mixture was stirred for an additional hour. After the stirring, the mixture was filtered through a 200-mesh wire screen to obtain a bagasse biomass oil mixture (BOM). The viscosity was 556 mPa·s. The bagasse BOM was tested for ignition and combustion characteristics of fuels. The results are shown in Table 1.

**[Table 1]**

| Test result by FIA-100 | | | | |
|---|---|---|---|---|
| | Example 1 | Example 2 | Example 3 | Example 4 |
| Total combustion period (ms) | 10.8 | 10.4 | 13.6 | 13.45 |
| Main combustion period (ms) | 3.37 | 3.76 | 4.74 | 4.59 |
| Standard deviation of ignition delay time (ms) | 0.32 | 0.24 | 0.38 | 0.26 |
| Estimated cetane number | 38.7 | 43.9 | 33.6 | 33.4 |

Both the cedar BOM and the bagasse BOM had good fuel stability and each did not separate in the tank during the test period, and had combustion characteristics comparable to heavy oil A. In addition, both the cedar BOM and the bagasse BOM had a small standard deviation of the ignition delay time, suggesting that they are suitable for operation in multi-cylinder engines.

## Claims

1. A biomass-containing fuel comprising:
a char produced by pyrolysis of plant biomass; and
a fuel oil.

2. The biomass-containing fuel according to claim 1,
wherein the char produced by pyrolysis of plant biomass is obtained by pyrolysis at a temperature of 250°C to 450°C.

3. The biomass-containing fuel according to claim 1 or 2,
wherein the char produced by pyrolysis of plant biomass comprises particles, with 95% or more of the particles having a particle size of 50 µm or less.

4. The biomass-containing fuel according to any one of claims 1 to 3,
wherein the char produced by pyrolysis of plant biomass has an average particle size of 0.1 µm or more and 20 µm or less.

5. The biomass-containing fuel according to any one of claims 1 to 4,
wherein the char produced by pyrolysis of plant biomass is contained in a proportion of 10 to 60% by mass based on 100% by mass of the biomass-containing fuel.

6. The biomass-containing fuel according to any one of claims 1 to 5,
wherein the biomass-containing fuel has a viscosity of 1000 mPa·s or less.

7. A method for producing a biomass-containing fuel, the method comprising:
carbonizing plant biomass by pyrolysis to produce a char;
pulverizing the char obtained in the carbonizing; and
mixing the pulverized material obtained in the pulverizing with a fuel oil.
